# EUROPEAN PATENT APPLICATION

(11) **EP 4 721 557 A1**
(43) Date of publication of application: **08.04.2026**
(21) Application number: 25206160.1
(22) Date of filing: 01.10.2025
(51) Int. Cl.: A01K 25/00

(54) **MUZZLE ENABLING YAWNING**

(30) Priority: 02.10.2024 US 202463702154 P
(71) Applicant: Perzov, Evgeni, 4207863 Netanya (IL)
(72) Inventor: Perzov, Evgeni, 4207863 Netanya (IL)
(74) Representative: Boult Wade Tennant LLP

(57) **Abstract**

The present invention provides a muzzle for muzzling an animal. The muzzle features a guard comprising a wire basket configured to accommodate within its central cavity the snout, mouth and jaws of the muzzled animal, wherein the wire basket comprises a lower enclosed niche, which is sized and angled to receive an extended lower jaw of the animal adopted in a yawn. The muzzle also features a strap system for securing the muzzle about the head of the animal for correct and secure enclosing and positioning of the snout, mouth and jaws of the animal within the wire basket. The present invention further provides a method of using the muzzle and a method of manufacture.

## Description

### FIELD OF THE INVENTION

The present invention relates to a muzzle for an animal and a method of use thereof. Moreover, the present invention is of a food holding device for encouraging an animal to wear a muzzle.

### BACKGROUND OF THE INVENTION

Muzzles are typically worn by animals, such as dogs and can have a variety of uses. They are guards which cover or restrict the opening of at least the mouth of an animal to prevent the animal from biting another animal or a person. The muzzle may be used to prevent the animal from causing itself harm, by for example preventing it from licking or biting an infected area of its body. Muzzles can be used in dog training. They are also useful in non-vicious animals when the animal is put in a stressful situation, such as when being groomed. In many countries the law maintains that at least certain animals and breeds of animal should be muzzled when outside.

Dogs open and use their mouths to perform a plurality of functions. These include, but are not limited to eating, drinking, barking, controlling body temperature, barring teeth, panting, self grooming and yawning. Dogs yawn for a number of reasons, which as well as increasing oxygen supply include facilitating mood changes. Dogs yawn when they are anxious, when they are excited, they use yawns as a calming signal and to calm themselves down. The muzzles of the art when worn may be configured with sufficient space to facilitate drinking or even eating, but they do not provide sufficient room for the animals to yawn and fully extend their jaws open as in a yawn. This is a serious disadvantage of the available muzzles and adds to the stress of the actual wearing of the muzzle.

It would therefore be desirable to have a muzzle which enables the animal wearing the muzzle to yawn and open its mouth so that its jaw is fully extended. It would be advantageous if the muzzle is sized for a comfortable and secure fit on different types, sizes and breeds of animal. It would be beneficial if the muzzles provided optimal air flow to the animal. It would also be useful to have a method of producing such a muzzle. The present invention provides such a muzzle and method of manufacture thereof.

### SUMMARY

The invention may have several aspects. An aspect of the invention pertains to a muzzle for muzzling an animal comprising: a guard comprising a front, a back, a left, a right, a top and a bottom faces, the guard characterized as a wire basket configured to accommodate within its central cavity the snout, mouth and jaws of the muzzled animal, wherein the guard comprises a lower enclosed niche, which is shaped and angled to receive an extended lower jaw of the animal adopted in a yawn; and a strap system for securing the muzzle about the head of the animal for correct and secure enclosing and positioning of the snout, mouth and jaws of the animal within the guard.

In one or more embodiment, wherein the guard comprises:
a front side extending lengthways and width ways, the front side comprising wire members, wherein a first section of at least part of the front side is configured to be adjacent to the front facing part of the mouth of the muzzled animal and features the wire members in a grille configuration and a second section is coupled to and below the grille section comprising wire members which extend vertically down from the grille and curve inwards towards the back face of the animal to couple to the bottom face of the guard and form the niche with the bottom face;
an opposing back side, wherein the back face is open and is configured to receive the snout, mouth and jaws of the animal into the open central cavity of the muzzle;
a left side face and a right side face, wherein the side faces of the guard extend forwardly from the back face to join the respective sides of the front side, the side faces spaced apart from each other to provide a fit about the sides of the face of the animal, the side faces comprising wire bars configured for air flow through the spacing between the bars;
a top side face, extending forwardly from the back face to the front side and joining at its side edges to the perpendicular side faces, the top face comprising spaced apart wire bars, the top face configured for positioning above the snout of the animal and projecting outwards from the bridge of the snout to join the top extremity of the perpendicular positioned front side; and
a bottom side face comprising spaced apart wire bars, the bottom face joined at its respective extremities to the side faces and the front side and extending forwardly at a downward angle from the backside to the front side, wherein the angle corresponds to about at least the angle of the contour of the extended lower jaw of the animal in a yawn.

In one or more embodiments, the muzzle comprising a protective nose piece coupled to the top face of the guard and configured to be worn on top of the snout of the animal.

In one or more embodiments, the animal is a dog.

In one or more embodiments, the angle is at least about 100 degrees. In one or more embodiments, the angle is at least about 120 degrees.

In one or more embodiments, the cavity of the guard is configured to allow an animal wearing the muzzle to breathe, drink, eat and yawn.

In one or more embodiments, the guard is constructed from the coupling of three separate wire arrangements.

In one or more embodiments, the three separate wire arrangements are formed using a 3D wire bender. In one or more embodiments, the three separate wire arrangements are joined together by welding the manufactured three separate wire arrangements together using a wire welder.

In one or more embodiments, the wire arrangements comprise:
a first wire arrangement comprising at least one wire member folded to form at least part of the front side, the top face, the bottom face, the right side face, the left side face and the backside of the guard;
a second wire arrangement comprising at least one wire member folded to form at least part of the front side, the left side face, the right side face and the backside face of the wire basket; and

a third wire arrangement comprising at least one wire member folded to form at least part of the front side, the right side face, the left side face, the bottom face, the top face and the backside of the guard.

In one or more embodiments, the muzzle further comprising a food holding device configured for holding a piece of food, the food holding device comprising at least one attachment means to allow attaching the food holding device to the muzzle such that when attached to the muzzle the food within the food holding device encourages the animal to wear the muzzle.

In one or more embodiments, the food holding device comprises a frame element with a central open space for inserting therethrough a food.

In one or more embodiments, the attachment means are designed to securely attach the food holding device to the muzzle without causing discomfort to the animal.

In one or more embodiments, wherein the attachment means comprise at least one clasping member disposed on at least one position of the frame.

In one or more embodiments, the frame has a square or a circular shape.

In one or more embodiments, the food is positioned within the food holding device such that the front side thereof extends toward the central cavity of the muzzle and at least the back face thereof extends out of the frame toward the inner surface of a face of the muzzle and is locked between the face of the muzzle and the frame.

In one or more embodiments, the size of the guard provides a front side of the guard spaced apart from the face of the muzzled animal.

In one or more embodiments, the angle of the bottom face is disposed in relation to the back face and the front side of the guard and provides an empty niche in the front part of the bottom of the guard when the animal wearing the muzzle is not yawning.

In one or more embodiments, the nose piece extends lengthways from the left side to the right side of the guard and is sized to fit about the snout of the animal and widthways, the nose piece extends from one extremity of the snout to about the tip of the snout of the animal when worn, each side of the nose piece coupled to the respective adjacent side face of the guard.

In one or more embodiments, the strap system comprises at least neck strap with an adjustable length for strapping about the neck of the animal, and at least one forehead strap with an adjustable length extending from about the midpoint of the distal end of the top face of the animal to adjustably couple to about the midpoint of the neck strap and a plurality of anchoring straps for anchoring the neck strap and the forehead strap to the guard and to the animal.

In one or more embodiments, the guard is configured in a plurality of sizes for different sizes and ages of animal.

Another aspect of the invention pertains to a food holding device for encouraging an animal to wear a muzzle, the food holding device comprising a frame configured to hold a piece of food within a muzzle and at least one attachment means to allow attaching the food holding device to the muzzle.

In one or more embodiments, the food holding device comprises a frame element with a central open space for inserting therethrough a food piece.

In one or more embodiments, the attachment means are designed to securely attach the food holding device to the muzzle without causing discomfort to the animal.

In one or more embodiments, the attachment means comprise at least one clasping member disposed on at least one position of the frame.

In one or more embodiments, the frame has a square or a circular shape.

In one or more embodiments, the food piece is positioned within the food holding device such that the front side thereof extends toward the central cavity of the muzzle and at least the back face thereof extends out from the frame toward the inner surface of a face of the muzzle and is secured between the face of the muzzle and the frame.

In one or more embodiments, the food piece is reversibly attachable to a muzzle.

In one or more embodiments, the food piece is the attachment means configured to attach to a wire of a muzzle.

In yet another aspect, the invention pertains to a muzzle assembly for an animal, the muzzle assembly comprising a muzzle configured to be worn by the animal; and a food holding device for encouraging the animal to wear the muzzle, the food holding device comprising:
a frame configured to hold a piece of food within the muzzle; and
at least one attachment means configured to securely attach the food holding device to the muzzle without causing discomfort to the animal,
wherein the frame is configured to position the piece of food such that a front side of the piece of food extends into a cavity of the muzzle, and wherein the food holding device is reversibly attachable to the muzzle.

In one or more embodiments, the back face of the piece of food is secured between the muzzle and the frame.

In one or more embodiments, the at least one attachment means comprises at least one clasping member disposed on at least one position of the frame, the at least one clasping member configured to attach to a wire of the muzzle.

In one or more embodiments, the frame comprises a frame element with a central open space for inserting the piece of food therethrough.

In one or more embodiments, the frame has a square shape or a circular shape.

In one or more embodiments, the piece of food is positioned within the food holding device such that the back face of the piece of food extends out from the frame toward an inner surface of a face of the muzzle.

Yet another aspect of the invention pertains to a method for encouraging an animal to wear a muzzle, the method comprising
providing a muzzle assembly comprising a muzzle and a food holding device, the food holding device comprising a frame and at least one attachment means;
holding a piece of food within the muzzle using the frame;
securely attaching the food holding device to the muzzle;
positioning the piece of food such that a front side of the piece of food extends into a cavity of the muzzle and a back face of the piece of food is secured between the muzzle and the frame; and
reversibly attaching the food holding device to the muzzle.

In one or more embodiments, the at least one attachment means comprises at least one clasping member disposed on at least one position of the frame, and wherein securely attaching the food holding device to the muzzle comprises attaching the at least one clasping member to a wire of the muzzle.

In one or more embodiments, the frame comprises a frame element with a central open space, and wherein holding the piece of food within the muzzle comprises inserting the piece of food through the central open space of the frame element.

In one or more embodiments, the frame has a square shape or a circular shape.

In one or more embodiments, the method further comprising positioning the piece of food comprises positioning the piece of food within the food holding device such that the front face of the piece of food extends out from the frame toward an inner surface of a face of the muzzle.

Yet another aspect of the invention pertains to a method for manufacturing a guard of a muzzle comprising: manufacturing wires having a 3D structure using a 3D wire bender; and welding the manufactured 3D wires together using a wire welder to create the complex muzzle guard wire structure. In one or more embodiments, the 3D wire bender is an automatic wire bending machine. In one or more embodiments, the wire welder is an automatic spot-welding system. In one or more embodiments, the wire welder joins the wires manufactured by the 3D wire bender together.

### BRIEF DESCRIPTION OF THE DRAWINGS

The various features of the invention will best be appreciated by simultaneous reference to the description which follows and the accompanying drawings, which are not drawn to scale and in which:
FIGs 1a and 1b show perspective and top views of an exemplary muzzle according to an aspect of the present invention.
FIGs 2a - 2f show different views of an exemplary wire basket of an exemplary muzzle according to an aspect of the present invention.
FIG. 3 shows a perspective view of exemplary parts of an exemplary wire basket of an exemplary muzzle according to an aspect of the present invention.
FIGs 4 show a perspective view of an exemplary muzzle worn by a dog according to an aspect of the present invention.
FIGs. 5a and 5b show side and perspective views of an exemplary muzzle which further comprises a food holding device according to an aspect of the present invention.
FIGs. 6a and 6b show perspective views of coupling of a food piece to an exemplary food holding device according to an aspect of the present invention.
FIG. 7 shows a flow chart of an exemplary method of using an exemplary muzzle of the present invention according to an aspect of the present invention.

### DETAILED DESCRIPTION

In one aspect the present invention is of a muzzle for an animal. The animal may be a mammal. The animal may be a dog. In a further aspect, the present invention provides a method of production of a muzzle.

The muzzle, methods of use and production thereof of the present invention have many advantages. The muzzle enables the animal wearing it to extend its jaw open to yawn. The muzzle enables the animal to self calm when wearing it. The muzzle is configured to be substantially non restrictive in terms of opening of the mouth of the animal, whilst still providing optimal protection from biting by the animal. The muzzle is light weight and facilitates good air flow to the animal, whilst being worn. The muzzle is configured to allow the animal to pant and to control its body temperature. The method of production is quick, reduces waste of material, lowering costs of manufacture.

As used herein the terms 'a' and 'an' may mean 'one' or 'more than one'.

As used herein the terms 'comprising', 'including', 'containing', 'featuring', 'having' and any forms of the terms thereof are inclusive and open ended and do not exclude additional elements or method steps, which are not recited.

The term 'consisting essentially of' as used herein means that the scope is limited to the specified elements and those that do not materially affect the basic and novel characteristic(s) of the claimed device and materials.

Each of the phrases 'consisting of and 'consists of, as used herein, means 'including and limited to'.

The term 'method', as used herein, refers to steps, procedures, manners, means, or/and techniques, for accomplishing a given task including, but not limited to, those steps, procedures, manners, means, or/and techniques, either known to, or readily developed from known steps, procedures, manners, means, or/and techniques, by practitioners in the relevant field(s) of the disclosed invention.

Throughout this disclosure, a numerical value of a parameter, feature, characteristic, object, or dimension, may be stated or described in terms of a numerical range format. Such a numerical range format, as used herein, illustrates implementation of some exemplary embodiments of the invention, and does not inflexibly limit the scope of the exemplary embodiments of the invention. Accordingly, a stated or described numerical range also refers to, and encompasses, all possible sub-ranges and individual numerical values (where a numerical value may be expressed as a whole, integral, or fractional number) within that stated or described numerical range. For example, a stated or described numerical range 'from 1 to 6' also refers to, and encompasses, all possible sub-ranges, such as 'from 1 to 3', 'from 1 to 4', 'from 1 to 5', 'from 2 to 4', 'from 2 to 6', 'from 3 to 6', etc., and individual numerical values, such as '1', '1.3', '2', '2.8', '3', '3.5', '4', '4.6', '5', '5.2', and '6', within the stated or described numerical range of 'from 1 to 6'. This applies regardless of the numerical breadth, extent, or size, of the stated or described numerical range.

All ranges disclosed herein include the endpoints. The use of the term "or" shall be construed to mean "and/or" unless the specific context indicates otherwise.

The term 'about', in some embodiments, refers to ±30 % of the stated numerical value. In further embodiments, the term refers to ±20 % of the stated numerical value. In yet further embodiments, the term refers to ±10 % of the stated numerical value.

The term 'distal' when referring to the wire members and guard of the muzzle refers to the extremity near the backside and opening of the guard of the present invention. The term 'proximal' when referring to the wire members and guard of the muzzle refers to the extremity near the front side of the guard of the present invention.

The principles and operation of a muzzle, as well as methods of use and production thereof according to the present invention may be better understood with reference to the figures. The figures show non-limiting aspects of the present invention.

The present invention provides a muzzle. The muzzle may be worn by an animal to prevent the animal from biting itself, another animal or a person. The muzzle may also prevent the animal from partaking in other unwanted mouth related behavior, such as eating foods external to the muzzle, which are present in the vicinity of the animal.

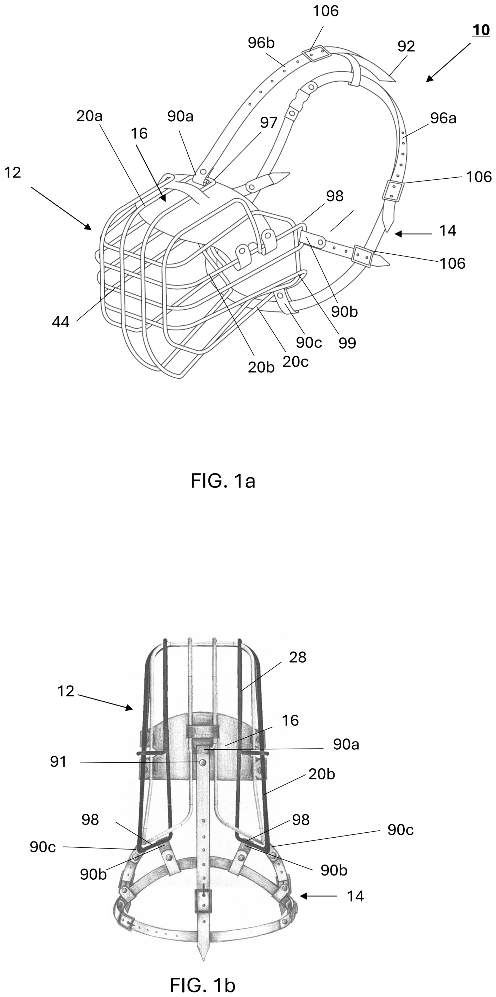

Figures 1a and 1b show perspective and top views of exemplary muzzles 10 according to an aspect of the present invention. Muzzle 10 may be configured to be worn by an animal, such as but not limited to a pet including a dog, a cat, a horse, and a donkey. The muzzle 10 may include a guard 12 and a strap system 14 for securing the guard 12 to the animal. In some embodiments, the muzzle 10 may include a protective nose piece 16.

The guard 12 may be configured to accommodate within its central cavity 52 the snout, mouth and jaws of the muzzled animal, wherein the wire guard 12 comprises a lower enclosed niche 48, which is sized and angled to receive and hold an extended lower jaw of the animal adopted in a yawn.

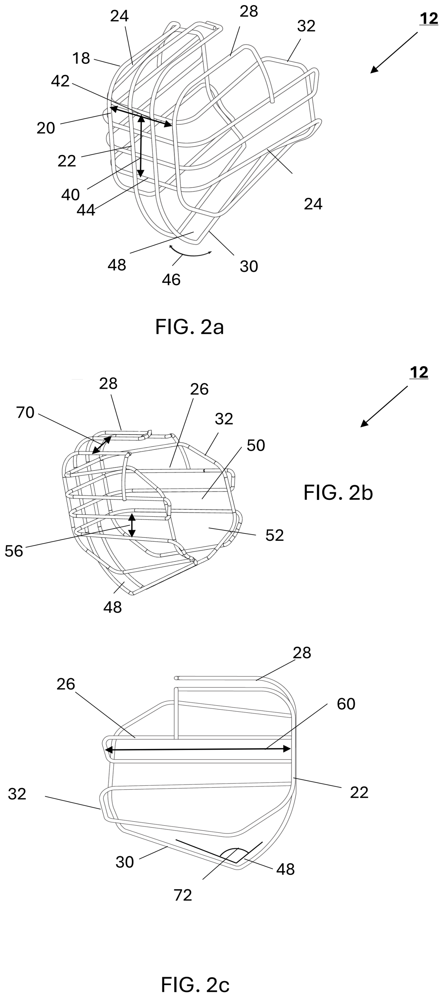

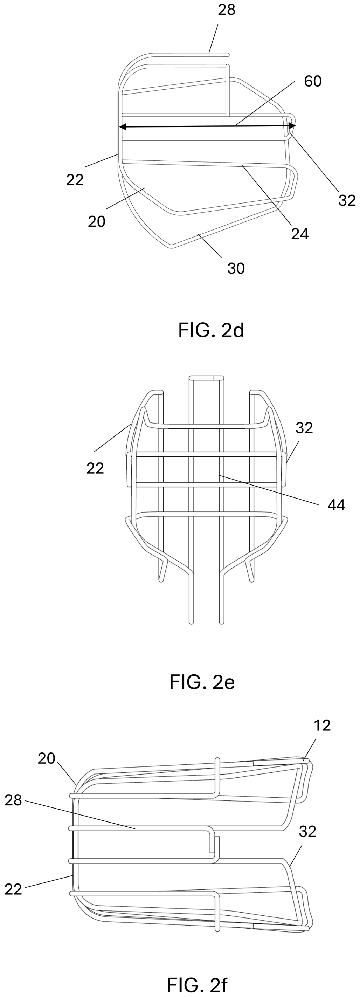

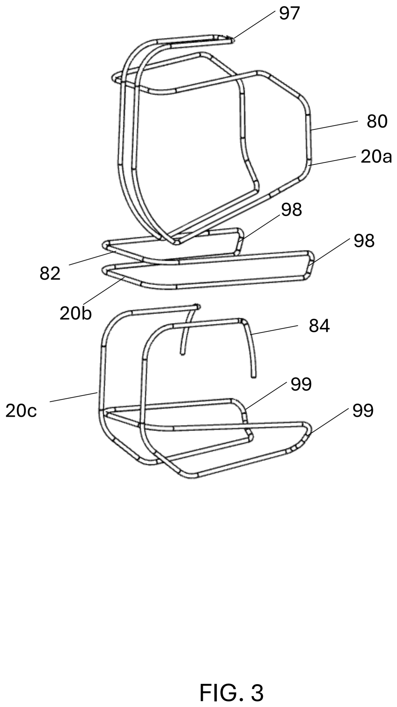

An exemplary guard 12 is shown when it is disconnected from the strap system 14 in Figures 2a - 2f. Figures 2a and 2b show perspective views of the guard 12. Figures 2c - 2f show side views (FIGs. 2c and 2d), a back view (FIG. 2e) and a bottom view (FIG. 2f) of the guard 12. As can be seen from Figures 2a and 2b, the guard 12 may feature a cage or a basket like configuration. The body 18 of the guard 12 may be constructed from at least one wire member 20 arranged to form an enclosure, which guards the mouth of the animal and wherein the at least one wire members 20 are sufficiently spaced apart as to provide good air flow to the animal. In some embodiments, the guard 12 is constructed from a plurality of wire members 20 (shown also in FIG. 3). In some embodiments, the guard 12 is constructed from at least two, or three wire members 20 (shown also in FIG. 3). In one embodiment, the guard 12 is constructed from about three wire members 20, but maybe be constructed for two, four or more wire members 20. In one embodiment, the guard 12 is constructed as a monolithic single wire member 20. The guard 12 may comprise a front facing side 22, a left side wall 24, a right side wall 26, a top side 28, a bottom side 30 and a rear backside 32.

The front facing side 22 extends lengthways 40 and width ways 42 and features crossed wire members 20 which form a front grille-like structure 44. When the muzzle 10 is worn, the grille 44 may be positioned parallel to and adjacent to the mouth of the muzzled animal. The length 40 of the grille 44 may be sized to correspond to the dimensions of the mouth of the animal sufficient to prevent the animal's mouth or teeth from being able to bite something or someone exterior to the grille 44. The length 40 of the grille section 44 may correspond to at least part of the vertical length between the upper and lower jaws of the open mouth of the animal. In some embodiments, the length 40 of the grille section 44 may correspond to the distance between the upper jaw and the lower jaw of the animal when the mouth is open to a size compatible with biting. In some embodiments, the length 40 of the grille section 44 may be less than the distance between the upper and lower jaws of the animal when in a fully extended or yawning configuration. The width 42 of the grille section 44 may extend to the left and right extremes of the front side 22 and may be sized to correspond to at least the width of the mouth or the width of the face of the animal wearing the muzzle 10. The width 42 of the grille section 44 may be sized wider than the face or the mouth of the animal. The front side 22 of the guard 12 may additionally include a lower section 46 coupled to and below the grille section 44, which extends from the grille 44 downwards. The lower section 46 may feature wire members 20, which are not crossed. In a non-limiting example, the lower section 46 may feature crossed wire members 20. The lower section 46 may feature wire members 20 disposed in a spaced apart vertical bar configuration, which extend vertically down from the grille section 44 and curve inwards to couple to the bottom face 30 of the guard 12 and form a niche 48 with the bottom side 30. The niche 48 may be for receiving at least part of the lower jaw of the muzzled animal when extended in a yawn.

As can be seen from Figures 2b and 2e, the backside 32 of the guard 12 is open. In some embodiments, the backside 32 of the guard 12 is configured to allow adaptation of the muzzle 10 to the animal's mouth's size. As opposed to typical muzzles, the backside 32 of muzzle 10 does not contain a peripheral ring that holds and connects the wire members 20.

The configuration of the backside 32 with wire members 20 as devised allows to narrow or widen the overall diameter/opening 50 of the backside 32 in a manner that will fit the diameter of the animal's mouth and secure the guard 12 to the animal. The opening 50 of the backside 32 is configured to receive the areas of the animal's face to be muzzled, such as the mouth, the nose and the jaws of the animal, into the open central cavity 52 of the guard 12. The snout, mouth and jaws of the animal are inserted through the opening 50 and into the central cavity 52 of the guard 12 to put the muzzle 10 on the animal. The dimensions of the backside 32 are designed for a comfortable fit around the target area to be muzzled of the face of the animal and for a secure fit and a safe guard. The backside 32 of the guard 12 features the distal extremities of the top side face 28, the bottom side 30, the left side 24 and the right side 26 of the guard 12.

As can be seen from figures 2b and 2d, the left side wall 24 of the guard 12 extends forwardly from the rear backside 32 to the front side 22 of the guard 12. The left side wall 24 is coupled at its top vertical extremity to the corresponding adjacent edge of the top side 28 of the muzzle 10. The left side wall 24 is coupled at its bottom vertical extremity to the corresponding adjacent edge of the bottom side 30 of the muzzle 10. The left side wall 24 is coupled at the proximal end of its width 60 to the corresponding adjacent edge of the front side 22 of the muzzle 10. The distal end of the width 60 of the left side wall 24 may form a section of the rear backside 32 of the guard 12. The left side wall 24 features a plurality of spaced apart wire members 20, which form bars extending horizontally from the rear backside 32 to the front side 22 of the guard 12. The spaced apart wire members 20 of the left side wall 24 may be extensions of the same wire members 20, which make up part of at least one of the front side 22, the top side 28, the right side 26 and/or the bottom side 30 of the guard 12. The distance 56 between the wire members 20 (fig. 2b) may provide good air flow to the animal wearing the muzzle 10. The left side wall 24 provides an enclosing, restraining side wall to the muzzle 10. The left side wall 24 of the guard 12 is configured to be adjacent to the corresponding side of the face of the animal wearing the muzzle 10. In some embodiments, the left side wall 24 may be fitted in combination with the other walls of the guard 12 for a snug fit and may contact the adjacent side of the face of the animal wearing the muzzle 10. In some embodiments, the left side wall 24 may be fitted in combination with the other walls of the guard 12 so that it is spaced apart from the adjacent side of the face of the animal.

The right side wall 26 (FIG. 2c) of the guard 12 may be identical to the left side wall 24. The right side wall 26 (FIG. 2c) of the guard 12 extends forwardly from the rear backside 32 to the front side 22 of the guard 12. The right side wall 26 is coupled at its top vertical extremity to the corresponding adjacent edge of the top side 28 of the muzzle 10. The right side wall 26 is coupled at its bottom vertical extremity to the corresponding adjacent edge of the bottom side 30 of the muzzle 10. The right side wall 26 is coupled at the proximal end of its width 60 to the corresponding adjacent edge of the front side 22 of the muzzle 10. The distal end of the width 60 of the right side wall 26 may form a section of the backside 32 of the guard 12. The right side wall 26 may feature a plurality of spaced apart wire members 20, which form bars extending horizontally from the backside 32 to the front side 22 of the basket. The spaced apart wire members 20 may be extensions of the same wire members 20, which make up part of at least one of the front side 22, the top face 28, the left face 24 and the bottom face 30 of the guard 12. The distance between the wire members 20 may provide good air flow to the animal wearing the muzzle 10. The right side wall 26 provides an enclosing, restraining right side wall 26 to the muzzle 10. The right side wall 26 of the guard 12 is configured to be adjacent to the corresponding side of the face of the animal wearing the muzzle 10. In some embodiments, the right side wall 26 may be sized and fitted in combination with the other walls of the guard 12 for a snug fit and may contact the adjacent side of the face of the animal wearing the muzzle 10. In some embodiments, the right side wall 26 may be sized and fitted in combination with the other walls of the guard 12 so that it is spaced apart from the adjacent side of the face of the animal.

As can be seen from figures 2b and 2f, the top side wall 28 of the guard 12 may provide in combination with the other walls, an enclosing top wall to the guard. The top side wall 28 extends forwardly from the rear backside 32 to the front side 22 of the guard 12. The top side wall 28 may feature a plurality of spaced apart wire members 20, which form bars extending horizontally from the backside 32 to the front side 22 of the guard 12. The spaced apart wire members 20 may be extensions of the same wire members 20 making up part of at least one of the front side 22, the left face 24, the right face 26 and the bottom face 30 of the guard 12. The proximal extremity of the top side wall 28 may be coupled to the corresponding adjacent edge of the front side 22 of the guard 12. The distal extremity of the top side wall 28 may form part of the back side 32 of the guard 12. The left side of the top wall 28 may be coupled to the adjacent corresponding edge of the left wall 24 of the guard 12. The right side of the top wall 28 may be coupled to the adjacent corresponding edge of the right wall 26 of the guard 12. The distance 70 between the wire members 20 may provide good air flow to the animal wearing the muzzle 10. The top side wall 28 of the guard 12 is configured to be adjacent to the top of the nose of the animal wearing the muzzle 10. In some embodiments, the top side wall 28 may be sized to fit and rest on the bridge of the nose of the animal wearing the muzzle 10.

The bottom side wall 30 of the guard 12 provides in combination with the other walls, an enclosing bottom wall to the guard 12. The bottom side wall 30 extends forwardly from the rear backside 32 to the front side 22 of the guard 12. The bottom side wall 30 extends forwardly from the rear backside 32 to the front side wall 22 at an angle 72 (fig. 2c) from the rear backside. The angle 72 may be an angle sufficient to correspond to the contour of the lower jaw of the animal when fully extended or extended in a yawn. The angle 72 may be greater than 90 degrees. The angle 72 may be greater than 100. The angle 72 may be greater than 110. The angle 72 may be greater than 120. In some embodiments, the angle 72 may range from about 70 degrees to about 150 degrees. For example, the angle 72 may range from about 90 degrees to about 150 degrees. Optionally, the angle 72 may range from about 100 degrees to about 150 degrees, from about 100 degrees to about 140 degrees, or from about 100 degrees to about 130 degrees. Each possibility represents a separate embodiment of the invention. The angle 72 of the incline of the bottom side wall 30 is designed so that it accommodates the extended jaw, but at its upper limit does not dig into the torso or any other part of the animal wearing the muzzle 10. The bottom side wall 30 may feature a plurality of spaced apart wire members 20, which form bars extending at an angle 72 downward from the rear side 32 to the front side 22 of the guard 12. The spaced apart wire members 20 may be extensions of the same wire members 20, which make up part of at least one of the front side 22, the left face 24, the right face 26 and the top face 28 of the guard 12. The proximal extremity of the bottom side wall 30 may be coupled to or may be extensions of the wires 20, which make up the corresponding adjacent bottom edge of the front side 22 of the guard 12. The proximal extremity of the bottom side wall 30 may be coupled to or may be extensions of the wires 20, which make up the corresponding adjacent edge of the lower section of the front side 22. The proximal extremity of the bottom wall 30 may be coupled to the inward curving part of the lower section 46 of the front side 22 to form a niche 48 with the lower section of the front side, configured to receive an extended lower jaw of the muzzled animal. The distal extremity of the bottom wall 30 may form part of the back side 32 of the guard 12. The left side of the bottom wall 30 may be coupled to the adjacent corresponding edge of the bottom of the left wall 24 of the guard 12. The right side of the bottom wall 30 may be coupled to the adjacent corresponding edge of the bottom of the right wall 26 of the guard 12. The distance between the wire members 20 may provide good ventilation to the animal wearing the muzzle 10. The bottom wall 30 of the guard 12 is configured to be positioned adjacent to the lower jaw of the animal wearing the muzzle 10.

In some embodiments, the guard 12 features coated wire members 20. In some embodiments, the spacing between the wire members 20 may adopt any suitable shape for providing ventilation to the muzzled animal. In some embodiments, the guard 12 may be made from a non wired material, which provides an enclosure configured to accommodate within its central cavity 52 the snout, mouth and jaws of the muzzled animal and wherein the enclosure includes a lower enclosed niche 48, which is sized and angled to receive an extended lower jaw of the animal adopted in a yawn.

Figure 3 shows a perspective view of exemplary parts, 80, 82, 84 of an exemplary guard 12 of an exemplary muzzle 10 according to an aspect of the present invention. The guard12 of the present invention can be made by the coupling of wire members 20 to form the front side 22, top face 28, bottom face 30, right face 26, left face 24 and backside 32 of the guard 12 as described herein. The wire members 20 may be folded to form the bars, the grille 44 and the sides of the guard 12 and the spacing between the bars. In some embodiments, three wire members 20a, 20b, 20c may be suitably folded and coupled to form the guard 12 as shown in Figure 3. A first wire member 20a may be folded to form a first section 80, which may form at least part of the front side 22, top face 28, bottom face 30, right side face 26, left side face 24 and backside 32. An upper proximal end of wire member 20a forms a top proximal loop 97. A second wire member 20b may be folded to form a second section 82, which may form at least part of the front side 22, the left side face 24, the right side face 26 and the backside face 32. Two opposing proximal ends of wire member 20b form a first and a second side and middle proximal loops 98. A third wire member 20c may be folded to form a third section 84, which may form at least part of the front side 22, right side face 26, left side face 24, bottom face 30, top face 28 and backside 32 of the muzzle 10. Two opposing proximal ends of wire member 20c form a first and a second side and bottom proximal loops 99. The three sections 80, 82, 84 may be fixedly coupled together in any suitable way to form the muzzle 10 of the present invention.

Parts 80, 82, 84 can be manufactured utilizing a 3D machine, such a three dimensional (3D) automatic wire bending machine. This procedure allows speedy manufacturing of complex geometries that would be difficult or impossible to achieve with traditional manufacturing techniques. Traditional manufacturing techniques include 2D wire bending machines wherein each wire is manufactured separately and in 2D thus requiring extensive preparation and complicated assembly and welding.

The parts formed may be coupled to each other using for example, automatic spot-welding system. The automatic spot-welding system allows to join two or more of part 80, 82, and 84 by applying heat and pressure at specific points or spots to create a weld. This system automates the traditional spot-welding process, increasing efficiency and consistency in industrial settings. Thus, in one or more embodiments, the invention provides a method for manufacturing a guard of a muzzle comprising: manufacturing wires having a 3D structure using a 3D wire bender; and welding the manufactured 3D wires together using a wire welder to create the complex muzzle guard wire structure. In one or more embodiments, the 3D wire bender is an automatic wire bending machine. In one or more embodiments, the wire welder is an automatic spot-welding system. In one or more embodiments, the wire welder joins the wires manufactured by the 3D wire bender together. The formed guard 12 is flexible and devoid of any circumference ring that restricts flexing its opening 50. This allows to adjust the diameter of the opening 50 of the guard 12 and secure the guard to the animal after wearing thereof.

Turning back to figures 1a and 1b, the muzzle 10 may include a strap system 14 to secure the guard 12 to the face of the muzzled animal, with the mouth enclosed within the guard 12 enclosure. Figure 1a and Figure 1b, show exemplary strap system 14 coupled to the guard 12. The strap system 14 may include a plurality of straps 96 attached to at least one of anchoring straps 90a, 90b and 90c to anchor the guard 12 to the strap system 14, secure the muzzle in the correct position to the animal and fit the muzzle 10 to the animal. The straps 96 may feature a length of material. The length may be determined according to the size of the mouth, jaws and neck area of the animal wearing the muzzle and the function of the strap 96, so that the guard 12 is held in place correctly and the straps 96 fit about the target muzzle 10 anchoring areas of the animal. In some embodiments, the straps 96 may be made of a non stretching fabric, such as, but not limited to leather. The strap system 14 may include at least one neck strap 96a configured to strap around the circumference of the neck of the animal and at least one forehead strap 96b.

The at least one neck strap 96a may comprise a length of strap material, which may be adjustable by any suitable adjustable means 106, such as, but not limited to a belt type buckle and corresponding receiving hole, strips of Velcro and press studs. The neck strap 96a may be attached to the guard 12 by a plurality of anchoring straps 90b.

The anchoring strap 90a may be coupled to a proximal top loop 97 of the wire member 20a.

A plurality of anchoring straps 90b may be coupled to a proximal side loop 98 of the wire member 20b.

The plurality of anchoring straps 90c may be coupled to a proximal bottom loop 99 of the wire member 20c.

The plurality of anchoring straps 90b and 90c may be fixedly coupled to the guard 12 and to the neck strap 96a. The anchoring straps 90 may be coupled by any suitable anchoring means 91, such as, but not limited to links, pins etc. In some embodiments, the anchoring straps 90a, 90b and 90c may in addition or instead of include adjustable strap means for adjustably attaching to the guard 12 and the neck strap 96a or forehead strap 96b.

The straps 96 may include two connectable portions and at least one adjustable means 106, wherein the length of the straps 96 may be adjustable.

A first part of the neck strap 96a may be coupled at one end to the wire member 20b and the length of the strap may extend horizontally so that a second end of the strap 96a is coupled to the corresponding adjacent position on the right side of the neck strap 96a. The coupling to the neck strap 96a may be adjustable to reduce the length or increase the length of the strapped distance between the guard 12 and the neck strap 96a according to the size of the animal for proper fitting of the muzzle on different sizes of animal. One exemplary adjustment means 106 for adjusting the length of the straps is a buckle and notch system. One part of the buckle and notch system 106 may be disposed on the adjustable strap means 106 and the corresponding part of the buckle and notch system may be disposed on the neck strap 96a.

The at least one forehead strap 96b may be one forehead strap. The forehead strap 96b may feature a length of strap which is sized to extend from the bridge of the nose of the animal and up between the ears of the muzzled animal to couple to the neck strap 96a at about the middle position of the neck strap. One part of the forehead strap 96b may be fixedly coupled to the guard 12 at a position adjacent to the midline of the guard 12 on the top face 28 and specifically to wire member 20. The second part of the strap 96b o may be adjustably coupled to the neck strap 96a at about the middle position of the length of the neck strap 96b. The coupling to the neck strap 96a may be adjustable to reduce the length or increase the length of the strapped distance between the guard 12 and the neck strap 96b for proper fitting of the muzzle on different sizes of animal. One exemplary adjustment means 106 for adjusting the strap means 96 is a buckle and notch system. One part of the buckle and notch system may be disposed on the adjustable forehead strap 96b and the corresponding part of the buckle and notch system may be disposed on the neck strap 96a.

The strap system 14 may include additional straps, which may be fixedly attached, detachable, may feature adjustable lengths and may be of fixed length.

The muzzle of the present invention may include a protective nose piece 16. The protective nose piece 16 may feature a protective length of material which provides a buffer between the wire members 20 and the skin of the muzzled animal. The protective material may cover a suitable area of the top face 28 of the guard 12. The protective nose piece 16 may be positioned and coupled to the guard 12 so that it is disposed under the wire members 20 and may be made of a suitable material such as, but not limited to leather. The protective nose piece 16 may be fixedly coupled to the guard 12. In some embodiments, the protective nose piece 16 may be detachable from the guard 12 for cleaning or replacement of the protective nose piece. The protective nose piece 16 may be padded for optimal comfort. When the muzzle 10 is worn by the animal the protective nose piece 16 may sit on the snout and bridge of the animal.

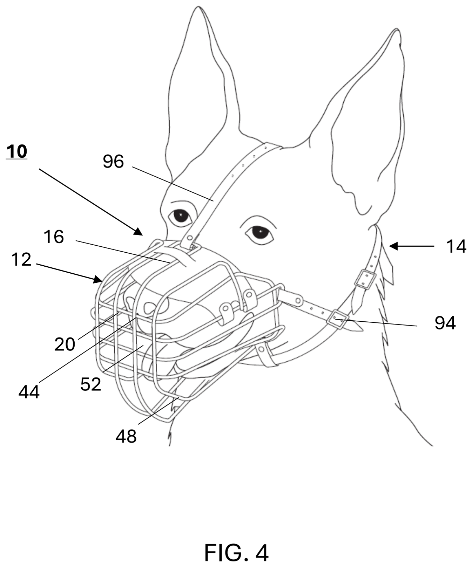

The muzzle 10 of the present invention is configured to be worn by any suitable animal. Figure 4 shows a perspective view of an exemplary muzzle 10 worn by a dog according to an aspect of the present invention. The dog's mouth, snout and jaws are accommodated in the central cavity 52 of the guard 12. When the muzzle 10 is worn, the grille 44 of the front side 22 of the guard 12 is spaced apart from the face of the dog so that the grille protects anything exterior to the muzzle from the mouth of the dog. The guard 12 sits on the bridge of the snout such that the protective nose piece 16 contacts the dog and cushions the dog from the wire members 20 of the guard. The guard 12 is strapped to the dog, wherein the neck strap 94 of the muzzle 10 is tied around the neck of the dog under the ears so that the neck strap 94 encircles the circumference of the neck and the forehead strap 96 extends over the forehead and between the ears to meet and attach to the neck strap 94. The side straps 90b, forehead strap 96 and neck strap 94 can be adjusted so that the muzzle 10 is fitted securely to the dog. As can be seen from Figure 4, the dog's mouth 140 is open. When the dog yawns the extended lower jaw 144 drops downwards at an angle and the muzzle guard 12 accommodates the jaw extension in the pocket niche 48 formed between the front side 22 and the bottom face 30 of the guard.

The muzzle 10 of the preset invention is configured in different sizes to fit different types and sizes of animal. The plurality of faces of the guard 12 may be produced in different sizes and shapes for compatibility to the animal with suitable sized niches 48 for holding the yawn extension of the lower jaw. The dimensions of the neck, forehead, face, mouth and snout of the animal should be measured and the muzzle 10 that fits those dimensions should be used on that animal for a safe and effective use of the muzzle.

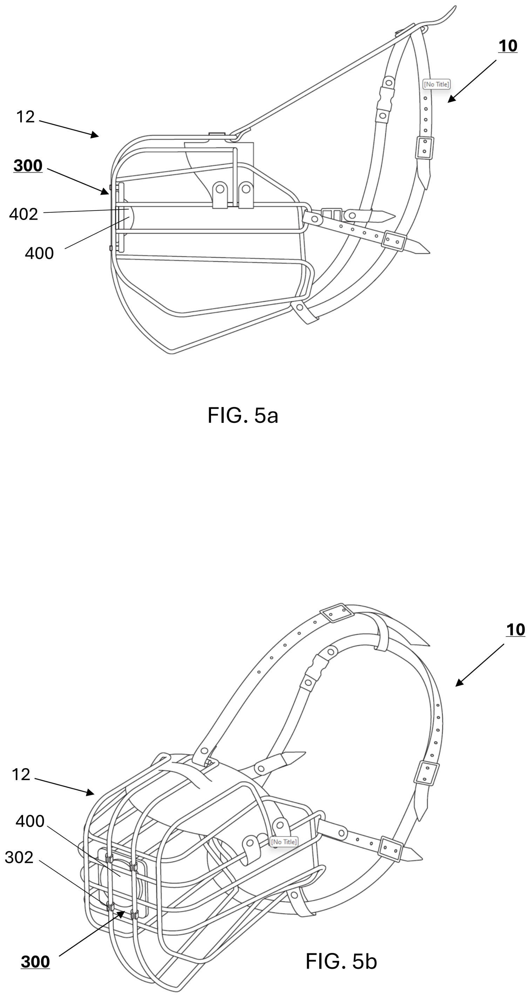

Figures 5a-5b show muzzle 10 with muzzle guard 12 which may further comprise a food holding device 300 configured to encourage the animal to put its mouth and nose into the wire basket of the muzzle guard 12. The food holding device 300 may be positioned to attach various faces of the muzzle guard 12. The food holding device 300 may be positioned to attach the front, or the right and/or left, or top or bottom face of the muzzle guard 12. In one embodiment, the food holding device 300 is positioned on the front side 22 of the muzzle guard 12, close to the nose of the animal. The food holding device 300 may include attachment means 302 which may feature various mechanisms for attaching the frame 304 of the food holding device 300 to the one or more bars 20 of the muzzle guard 12. In one embodiment, the attachment means 302 comprise clasping members in the form of spring clips. Further exemplary attachment means 302 may include for example, snap hooks, locking pins, toggle clamps, cam locks, magnetic clasps, latch hooks, screw clamps, ratchet straps, hinged clasps and the alike. Each possibility represents a separate embodiment of the invention. In one embodiment, the attachment means 302 is reversibly attachable and can be attached and detached when needed, for example for loading a piece of food 400 onto the food holding device 300 or for removing the piece food 400.

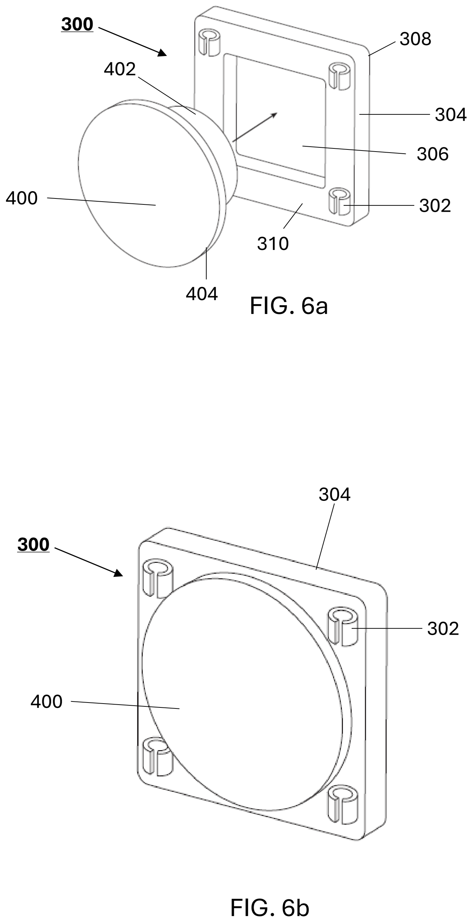

Many animals find muzzles uncomfortable or distressing, which can make it challenging for pet owners and trainers to use them effectively. Traditional muzzles can be difficult to put on, and animals may resist wearing them, leading to stress for both the animal and the handler. This has created a need for innovative solutions that can make the process of wearing a muzzle more acceptable and less stressful for animals. One approach to addressing this issue is to incorporate positive reinforcement techniques, such as using food rewards, to encourage animals to willingly wear muzzles. By integrating a food holding device into the muzzle, it is possible to create a more positive association with the muzzle, thereby reducing resistance and improving the overall experience for the animal. Figures 6a and 6b show an exemplary food holding device 300 of a muzzle, such as muzzle 10 of the invention. A muzzle assembly for an animal includes a muzzle and a food holding device designed to encourage the animal to wear the muzzle. The food holding device features a frame to hold a piece of food within the muzzle and attachment means to securely attach the device to the muzzle without causing discomfort. The frame positions the food so that its front side extends into the muzzle cavity while the back face is secured between the muzzle and the frame. The food holding device is also reversibly attachable to the muzzle.

Food holding device 300 may be configured to attach and fit various types, sizes and shapes of muzzles, not necessarily the muzzle 10 of the present invention. Food holding device 300 includes a frame 304 with a central open space 106 configured to accommodate within the space 106 a piece of food 400. Frame 304 may feature various shapes such as a square as illustrated in figure 6. Nevertheless, various shapes of frame 102 are contemplated such as a circle, a rectangle, and ellipse, and a triangle. As depicted supra, the food holding device 300 includes at least one attachment means 302 that can attach the food holding device 300 to a face of the muzzle. For example, the attachment means 302 configured to couple to the wire members 20. A preferred position for attaching the food holding device 300 is on the inner surface of the front side a muzzle, such as front side 22. This position allows to guide the animal to enter its mouth, jaws and nose into a muzzle. The frame element 304 is made of durable and non-toxic materials to ensure the safety and well-being of the dog. For example, frame 304 may be made from a metal or a combination thereof. Frame 304 may be made from a polymeric material. Central open space 106 is sized to accommodate various types of food pieces, allowing for versatility in use. Exemplary suitable foods 400 include rigid snacks sized such that at least the front side thereof protrude from a rear face 108 of the food holding device 300. Further suitable foods include a food piece 400 having a hat-like configuration with protruding periphery. In this configuration the bulging portion of the food protrudes out toward the inner cavity of the muzzle and the back an periphery that has a diameter larger than the outer most diameter of the open space 106 allowing securing the food between the front side 110 of the food holding device and the inner surface of the guard of the muzzle.

The food holding device is easy to clean and maintain, ensuring hygiene and convenience for the user. The design of the food holding device allows for easy attachment and detachment from the muzzle, providing flexibility for the user.

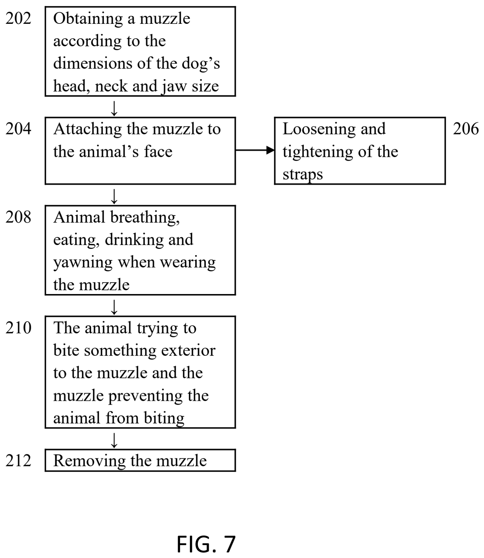

Figure 7 shows a flow chart of an exemplary method of using an exemplary muzzle 200 of the present invention according to an aspect of the present invention. A user measures the dimensions of the animal's snout, neck circumference muzzle, jaws, fully extended jaw, and obtains a suitably sized muzzle of the present invention 202. The muzzle may be put on animal 204. The adjustable straps may be loosened, and the animal's mouth, jaws and nose may be inserted into the basket of muzzle 206. The animal may be encouraged to put its mouth and nose into the wire basket. Encouragement methods may include putting food in the muzzle in a dedicated food holding device. The protective nose piece is positioned over the nose of the animal and the neck strap, forehead strap and side straps may be tightened or loosened until the muzzle is securely attached to the animal with the mouth, nose and jaws held therein. The animal may be stressed and may yawn. The muzzle is configured to enable the yawning and self-calming of the animal. The muzzle allows the animal to drink, eat and yawn and prevents the animal from biting anything exterior to the muzzle 208. The animal may try to bite someone or something exterior to the muzzle, but the guard prevents the animal from doing so 210. The muzzle may be removed by untying or loosening of the straps 212. The muzzle may be wiped or cleaned after or before use. The order of the steps is not meant to be limiting and may be done in any suitable order.

One skilled in the art can appreciate from the foregoing description that the broad muzzle device, and techniques of the aspects of the present invention can be implemented in a variety of forms. Therefore, while the aspects of this invention have been described in connection with particular examples thereof, the true scope of the aspects of the invention should not be so limited since other modifications will become apparent to the skilled practitioner upon a study of the specification, and following claims.

### Exemplary clauses:

1. A muzzle for muzzling an animal comprising:
   a guard comprising a front, a back, a left, a right, a top and a bottom faces, the guard characterized as a wire basket configured to accommodate within its central cavity the snout, mouth and jaws of the muzzled animal, wherein the guard comprises a lower enclosed niche, which is shaped and angled to receive an extended lower jaw of the animal adopted in a yawn; and
   a strap system for securing the muzzle about the head of the animal for correct and secure enclosing and positioning of the snout, mouth and jaws of the animal within the guard.
2. The muzzle of clause 1, wherein the guard comprises:
   a front side extending lengthways and width ways, the front side comprising wire members, wherein a first section of at least part of the front side is configured to be adjacent to the front facing part of the mouth of the muzzled animal and features the wire members in a grille configuration and a second section is coupled to and below the grille section comprising wire members which extend vertically down from the grille and curve inwards towards the back face of the animal to couple to the bottom face of the guard and form the niche with the bottom face;
   an opposing back side, wherein the back face is open and is configured to receive the snout, mouth and jaws of the animal into the open central cavity of the muzzle;
   a left side face and a right side face, wherein the side faces of the guard extend forwardly from the back face to join the respective sides of the front side, the side faces spaced apart from each other to provide a fit about the sides of the face of the animal, the side faces comprising wire bars configured for air flow through the spacing between the bars;
   a top side face, extending forwardly from the back face to the front side and joining at its side edges to the perpendicular side faces, the top face comprising spaced apart wire bars, the top face configured for positioning above the snout of the animal and projecting outwards from the bridge of the snout to join the top extremity of the perpendicular positioned front side; and
   a bottom side face comprising spaced apart wire bars, the bottom face joined at its respective extremities to the side faces and the front side and extending forwardly at a downward angle from the backside to the front side, wherein the angle corresponds to about at least the angle of the contour of the extended lower jaw of the animal in a yawn.
3. The muzzle of clause 2, comprising a protective nose piece coupled to the top face of the guard and configured to be worn on top of the snout of the animal.
4. The muzzle of clause 1, wherein the animal is a dog.
5. The muzzle of clause 1, wherein the angle is at least about one 100 degrees.
6. The muzzle of clause 1, wherein the angle is at least about 120 degrees.
7 The muzzle of clause 1, wherein the cavity of the guard is configured to allow an animal wearing the muzzle to breathe, drink, eat and yawn.
8. The muzzle of clause 2, wherein the guard is constructed from the coupling of three separate wire arrangements.
9 The muzzle of clause 8, wherein the wire arrangements comprise:
   a first wire arrangement comprising at least one wire member folded to form at least part of the front side, the top face, the bottom face, the right side face, the left side face and the backside of the guard;
   a second wire arrangement comprising at least one wire member folded to form at least part of the front side, the left side face, the right side face and the backside face of the wire basket; and
   a third wire arrangement comprising at least one wire member folded to form at least part of the front side, the right side face, the left side face, the bottom face, the top face and the backside of the guard.
10. The muzzle of clause 1, further comprising a food holding device configured for holding a piece of food, the food holding device comprising at least one attachment means to allow attaching the food holding device to the muzzle such that when attached to the muzzle the food within the food holding device encourages the animal to wear the muzzle.
11. The muzzle of clause 10, wherein the food holding device comprises a frame element with a central open space for inserting therethrough a food.
12. The muzzle of clause 10, wherein the attachment means are designed to securely attach the food holding device to the muzzle without causing discomfort to the animal.
13. The muzzle of clause 11, wherein the attachment means comprise at least one clasping member disposed on at least one position of the frame.
14. The muzzle of clause 11, wherein the frame has a square or a circular shape.
15. The muzzle of clause 10, wherein the food is positioned within the food holding device such that the front side thereof extends toward the central cavity of the muzzle and at least the back face thereof extends out of the frame toward the inner surface of a face of the muzzle and is locked between the face of the muzzle and the frame.
17. The muzzle of clause 1, wherein the size of the guard provides a front side of the guard spaced apart from the face of the muzzled animal.
18. The muzzle of clause 2, wherein the angle of the bottom face is disposed in relation to the back face and the front side of the guard and provides an empty niche in the front part of the bottom of the guard when the animal wearing the muzzle is not yawning.
19. The muzzle of clause 3, wherein the nose piece extends lengthways from the left side to the right side of the guard and is sized to fit about the snout of the animal and widthways, the nose piece extends from one extremity of the snout to about the tip of the snout of the animal when worn, each side of the nose piece coupled to the respective adjacent side face of the guard.
20. The muzzle of clause 1, wherein the strap system comprises at least neck strap with an adjustable length for strapping about the neck of the animal, and at least one forehead strap with an adjustable length extending from about the midpoint of the distal end of the top face of the animal to adjustably couple to about the midpoint of the neck strap and a plurality of anchoring straps for anchoring the neck strap and the forehead strap to the guard and to the animal.
21. The muzzle of clause 1, wherein the guard is configured in a plurality of sizes for different sizes and ages of animal.
22. A food holding device for encouraging an animal to wear a muzzle, the food holding device comprising a frame configured to hold a piece of food within a muzzle and at least one attachment means to allow attaching the food holding device to the muzzle.
23. The food holding device of clause 22, wherein the food holding device comprises a frame element with a central open space for inserting therethrough a food piece.
24. The food holding device of clause 22, wherein the attachment means are designed to securely attach the food holding device to the muzzle without causing discomfort to the animal.
25. The food holding device of claim 22, wherein the attachment means comprise at least one clasping member disposed on at least one position of the frame.
26. The food holding device of clause 22, wherein the frame has a square or a circular shape.
27. The food holding device of clause 22, wherein the food piece is positioned within the food holding device such that the front side thereof extends toward the central cavity of the muzzle and at least the back face thereof extends out from the frame toward the inner surface of a face of the muzzle and is secured between the face of the muzzle and the frame.
28. The food holding device of clause 22, which is reversibly attachable to a muzzle.
29. The food holding device of clause 22, wherein the attachment means configured to attach to a wire of a muzzle.
30. A muzzle assembly for an animal, the muzzle assembly comprising a muzzle configured to be worn by the animal; and a food holding device for encouraging the animal to wear the muzzle, the food holding device comprising:
   a frame configured to hold a piece of food within the muzzle; and
   at least one attachment means configured to securely attach the food holding device to the muzzle without causing discomfort to the animal,
   wherein the frame is configured to position the piece of food such that a front side of the piece of food extends into a cavity of the muzzle, and wherein the food holding device is reversibly attachable to the muzzle.
31. The muzzle assembly of clause 30, wherein the back face of the piece of food is secured between the muzzle and the frame.
32. The muzzle assembly of clause 30, wherein the at least one attachment means comprises at least one clasping member disposed on at least one position of the frame, the at least one clasping member configured to attach to a wire of the muzzle.
33. The muzzle assembly of clause 30, wherein the frame comprises a frame element with a central open space for inserting the piece of food therethrough.
34. The muzzle assembly of clause 30, wherein the frame has a square shape or a circular shape.
35. The muzzle assembly of clause 30, wherein the piece of food is positioned within the food holding device such that the back face of the piece of food extends out from the frame toward an inner surface of a face of the muzzle.
36. A method for encouraging an animal to wear a muzzle, the method comprising providing a muzzle assembly comprising a muzzle and a food holding device, the food holding device comprising a frame and at least one attachment means;
   holding a piece of food within the muzzle using the frame;
   securely attaching the food holding device to the muzzle;
   positioning the piece of food such that a front side of the piece of food extends into a cavity of the muzzle and a back face of the piece of food is secured between the muzzle and the frame; and
   reversibly attaching the food holding device to the muzzle.
37. The method of clause 36, wherein the at least one attachment means comprises at least one clasping member disposed on at least one position of the frame, and wherein securely attaching the food holding device to the muzzle comprises attaching the at least one clasping member to a wire of the muzzle.
38. The method of clause 36, wherein the frame comprises a frame element with a central open space, and wherein holding the piece of food within the muzzle comprises inserting the piece of food through the central open space of the frame element.
39. The method of clause 36, wherein the frame has a square shape or a circular shape.
40. The method of clause 36, wherein positioning the piece of food comprises positioning the piece of food within the food holding device such that the front face of the piece of food extends out from the frame toward an inner surface of a face of the muzzle.

## Claims

1. A muzzle for muzzling an animal comprising:
a guard comprising a front, a back, a left, a right, a top and a bottom faces, the guard characterized as a wire basket configured to accommodate within its central cavity the snout, mouth and jaws of the muzzled animal, wherein the guard comprises a lower enclosed niche, which is shaped and angled to receive an extended lower jaw of the animal adopted in a yawn; and
a strap system for securing the muzzle about the head of the animal for correct and secure enclosing and positioning of the snout, mouth and jaws of the animal within the guard.

2. The muzzle of claim 1, wherein the guard comprises:
a front side extending lengthways and width ways, the front side comprising wire members, wherein a first section of at least part of the front side is configured to be adjacent to the front facing part of the mouth of the muzzled animal and features the wire members in a grille configuration and a second section is coupled to and below the grille section comprising wire members which extend vertically down from the grille and curve inwards towards the back face of the animal to couple to the bottom face of the guard and form the niche with the bottom face;
an opposing back side, wherein the back face is open and is configured to receive the snout, mouth and jaws of the animal into the open central cavity of the muzzle;
a left side face and a right side face, wherein the side faces of the guard extend forwardly from the back face to join the respective sides of the front side, the side faces spaced apart from each other to provide a fit about the sides of the face of the animal, the side faces comprising wire bars configured for air flow through the spacing between the bars;
a top side face, extending forwardly from the back face to the front side and joining at its side edges to the perpendicular side faces, the top face comprising spaced apart wire bars, the top face configured for positioning above the snout of the animal and projecting outwards from the bridge of the snout to join the top extremity of the perpendicular positioned front side; and
a bottom side face comprising spaced apart wire bars, the bottom face joined at its respective extremities to the side faces and the front side and extending forwardly at a downward angle from the backside to the front side, wherein the angle corresponds to about at least the angle of the contour of the extended lower jaw of the animal in a yawn.

3. The muzzle of claim 1, wherein the animal is a dog.

4. The muzzle of claim 1, wherein the angle is at least about 100 degrees, or at least about 120 degrees.

5. The muzzle of claim 1, wherein the cavity of the guard is configured to allow an animal wearing the muzzle to breathe, drink, eat and yawn.

6. The muzzle of claim 2, wherein the guard is constructed from the coupling of three separate wire arrangements, wherein the wire arrangements comprise:
a first wire arrangement comprising at least one wire member folded to form at least part of the front side, the top face, the bottom face, the right side face, the left side face and the backside of the guard;
a second wire arrangement comprising at least one wire member folded to form at least part of the front side, the left side face, the right side face and the backside face of the wire basket; and
a third wire arrangement comprising at least one wire member folded to form at least part of the front side, the right side face, the left side face, the bottom face, the top face and the backside of the guard.

7. The muzzle of claim 1, further comprising a food holding device configured for holding a piece of food, the food holding device comprising at least one attachment means to allow attaching the food holding device to the muzzle such that when attached to the muzzle the food within the food holding device encourages the animal to wear the muzzle.

8. The muzzle of claim 7, wherein the food holding device comprises a frame element with a central open space for inserting therethrough a food, and wherein the attachment means are designed to securely attach the food holding device to the muzzle without causing discomfort to the animal, wherein the attachment means comprise at least one clasping member disposed on at least one position of the frame, and , wherein the frame has a square or a circular shape.

9. The muzzle of claim 7, wherein the food is positioned within the food holding device such that the front side thereof extends toward the central cavity of the muzzle and at least the back face thereof extends out of the frame toward the inner surface of a face of the muzzle and is locked between the face of the muzzle and the frame.

10. The muzzle of claim 2, wherein the angle of the bottom face is disposed in relation to the back face and the front side of the guard and provides an empty niche in the front part of the bottom of the guard when the animal wearing the muzzle is not yawning.

11. The muzzle of claim 3, further comprising a protective nose piece coupled to the top face of the guard and configured to be worn on top of the snout of the animal, wherein the nose piece extends lengthways from the left side to the right side of the guard and is sized to fit about the snout of the animal and widthways, the nose piece extends from one extremity of the snout to about the tip of the snout of the animal when worn, each side of the nose piece coupled to the respective adjacent side face of the guard.

12. The muzzle of claim 1, wherein the strap system comprises at least neck strap with an adjustable length for strapping about the neck of the animal, and at least one forehead strap with an adjustable length extending from about the midpoint of the distal end of the top face of the animal to adjustably couple to about the midpoint of the neck strap and a plurality of anchoring straps for anchoring the neck strap and the forehead strap to the guard and to the animal.

13. A method for encouraging an animal to wear a muzzle, the method comprising providing a muzzle assembly comprising a muzzle according to any one of the preceding claims and a food holding device, the food holding device comprising a frame and at least one attachment means;
holding a piece of food within the muzzle using the frame;
securely attaching the food holding device to the muzzle;
positioning the piece of food such that a front side of the piece of food extends into a cavity of the muzzle and a back face of the piece of food is secured between the muzzle and the frame; and
reversibly attaching the food holding device to the muzzle.

14. The method of claim 13, wherein the at least one attachment means comprises at least one clasping member disposed on at least one position of the frame, and wherein securely attaching the food holding device to the muzzle comprises attaching the at least one clasping member to a wire of the muzzle.

15. The method of claim 13, wherein the frame comprises a frame element with a central open space, and wherein holding the piece of food within the muzzle comprises inserting the piece of food through the central open space of the frame element, optionally, wherein the frame has a square shape or a circular shape, and wherein positioning the piece of food comprises positioning the piece of food within the food holding device such that the front face of the piece of food extends out from the frame toward an inner surface of a face of the muzzle.
